# EUROPEAN PATENT APPLICATION

(11) **EP 1 182 576 A1**
(43) Date of publication of application: **27.02.2002**
(21) Application number: 00117311.1
(22) Date of filing: 18.08.2000
(51) Int. Cl.: G06F 17/30

(54) **Data access system and method with proxy and remote processing**

(71) Applicant: SUN MICROSYSTEMS, INC., Palo Alto, California 94303 (US)
(72) Inventor: Heilig, Jörg, 22145 Hamburg (DE); Laux, Thorsten O., 20099 Hamburg (DE)
(74) Representative: HOFFMANN - EITLE

(57) **Abstract**

Access system and method for accessing data in a network allowing to reduce communication load in a client and server scenario. Requests from the client may be not directly executed, but handled by a proxy server which retrieves the requested data from an appropriate data server and determines whether further rendering or processing of the data is necessary. The data may be temporarily stored and a processing server may render the requested data appropriately, e.g., on request by the client upon receiving a link message from the proxy server, and transmit the rendered data to the client for further handling or visualization.

## Description

### FIELD OF THE INVENTION

The present invention relates to a data access system and method for accessing data in a network.

### BACKGROUND ART

In today's data communication networks a user may access information at virtually an arbitrary location. Various types of computer networks with data servers, and combinations thereof are available, e.g. public packet switched networks such as the Internet or local area networks such as a company wide intranet.

If for example a user operating a user data processing device is connected to a network of data processing devices such as the Internet and uses, e.g., a standard "browser" application (in the following referred to as browser) to access information, for example a HTML (hyper text markup language) document, available at a data server located somewhere in the network, the browser will generate and send a corresponding request via the network to the appropriate server storing the requested document.

A request generally includes information identifying the desired document and necessary routing information like address information of the target data server and the client computer, i.e., the user data processing device and running the browser. In response to receiving the request from the client, the data server will retrieve and transmit the requested document to the client for further processing or visualization.

This process, however, requires the browser to have the capability of handling the received data and performing the necessary processing steps for actually visualizing the information. In case of a HTML-language document, nowadays virtually any available browser has the tools necessary for interpretation and visualization. In this case, upon receiving the associated data, the browser may directly visualize the information or launch the required processing software needed for displaying the information. The same applies to, e.g. image data in one of the standard formats, such as JPEG, GIF, BMP and any other document in a standard format.

However, a browser run at the user data processing device obviously does not necessarily have the capability to handle certain types of information and will, upon receiving information which can not be interpreted, for example prompt the user that no suitable application processing program or data handler for visualizing or handling the received information is available.

As a solution of this problem it is conceivable to retrieve the required tools from somewhere on the network, which may be difficult, or to transmit the received data, which may not be handled at the client browser, to a dedicated site somewhere else in the network having the capabilities to perform the required processing steps on behalf of the client, in order to convert the received data into a data format which may be handled at the client browser.

Further, it is conceivable that a browser, even though being capable to handle the requested data, should not handle the data itself but instead the data should be handled at a dedicated site, for example in order to reduce a processing load at the user data processing device.

However, in case documents containing large amounts of data are requested by a client, for example in the megabyte range; and in case the client is connected to the network only through, for example, a low bandwidth telecommunication line or wireless communication link, the amount of time required for retrieving and visualizing a document may be long. Requested data would be transmitted to the client through the low bandwidth link to the client and thereafter transmitted to the dedicated site for further processing. After further processing at the dedicated site, resultant data in a format which may be interpreted or visualized by the browser at the client would then be transmitted back to the client.

Therefore, the above solution has the disadvantage of requiring the transmission of large amounts of data to and from the client and in case the client is connected to the network only through a low bandwidth communication link, retrieving and visualizing a document may require substantial time, which is clearly undesirable.

### SUMMARY OF THE INVENTION

It is therefore desirable to provide an access system and method for allowing retrieving and handling data in a network at reduced communication load.

The invention for example allows to reduce a communication load in a client and server scenario by providing a proxy and remote handling of requested data on behalf of a client at a server instead of directly transmitting the requested data to the client.

According to an embodiment, an access system for accessing data in a network comprises a proxy server arranged for receiving a request for data from a client and for determining whether the requested data have to be rendered before transmission to the client, and a processing server arranged for rendering the data and for transmitting the rendered data to the client. For example, by providing a proxy server for receiving a request for data from a client and by remotely rendering requested data at a processing server, the invention allows to significantly reduce a required communication load to the client, reducing latency, particularly in case of a low bandwidth connection between the client and a network of data servers. In case rendering of data is determined to be necessary the requested data may be rendered remotely at the processing server and only rendered data e.g. for visualization at the client may be transmitted to the client.

In a further embodiment the requested data may be retrieved from a data server and intermediately stored in a memory if it is determined that the requested data have to be rendered before transmission to the client, and the processing server may be further arranged for retrieving the data stored in the memory.

The proxy server may be arranged to transmit address information of the requested data to the processing server, and the processing server may arranged to retrieve the requested data from a data server using the address information.

The proxy server may include means or a code section containing instructions for generating a link message containing address information of the requested data, and means for transmitting the link message to the client enabling the client to request the data from the processing server.

The link message may further include at least one of the group consisting of address information of the processing server, data type information describing the requested data, a client identifier, and a session identifier.

The address information of the requested data may be constituted by an URL (uniform resource locator) and the data type information by a MIME (multipurpose internet mail extension) type.

The proxy server may include means or a code section containing instructions for direct transmission of the requested data to the client in case it is determined by the determining means that the requested data do not have to be rendered before transmission to the client.

At least the proxy server, the processing server and the temporary memory means may be connected by a local area network, by a wide area network or a combination thereof.

Further, a plurality of processing servers may be provided and means to determine at least one of the processing servers for rendering, and wherein the proxy server may be arranged to receive requests for data from a plurality of clients and to retrieve data from a plurality of data servers.

The processing server may be arranged to directly transmit the rendered data to the client or on a return path including the proxy server.

The processing server and the proxy server may be constituted by a single data processing device.

A client may comprise means or a code section containing instructions to receive and analyse a link message from an access system, and a data handler or a code section containing instructions for establishing a communication link between the client and the processing server and for receiving and handling rendered data from the processing server.

A client may comprise pre-selection means or a code section containing instructions for performing a pre-selection of requests for data into requests requiring rendering of data and requests which do not require rendering of data and for transmitting requests requiring rendering to the proxy server, and for directly retrieving data in case it is determined that the requested data do not require rendering before transmission to the client.

Further advantageous embodiments of the invention are disclosed in further claims.

### BRIEF DESCRIPTION OF THE DRAWINGS

- Fig. 1: shows a block diagram illustrating an access system according to an embodiment of the invention,
- Fig. 2: shows a flow diagram illustrating a sequence of messages transmitted in the method according to another embodiment of the invention,
- Fig. 3: shows a flow diagram illustrating a sequence of messages in accordance with another embodiment of the invention,
- Fig. 4: shows a block diagram illustrating an access system according to an embodiment of the invention,
- Fig. 5: shows a block diagram illustrating an access system according to another embodiment of the invention,
- Fig. 6: shows a flow diagram illustrating a sequence of messages transmitted in accordance with another embodiment of the invention,
- Fig. 7: shows a flow diagram illustrating a sequence of messages transmitted in accordance with another embodiment of the invention,
- Fig. 8: shows a flow diagram illustrating a sequence of messages transmitted in accordance with another embodiment of the invention, and
- Fig. 9: shows a block diagram illustrating an access system according to another embodiment of the invention.

### DETAILED DESCRIPTION OF THE PREFERRED EMBODIMENTS

Throughout the figures corresponding reference signs denote corresponding entities.

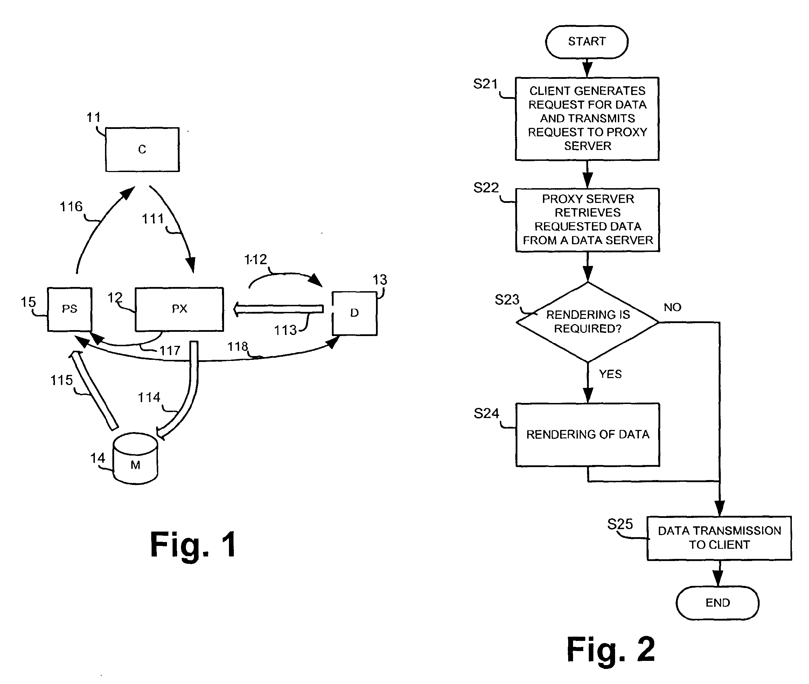

In the following a first embodiment of the invention will be described with respect to Fig. 1. Fig. 1 shows a schematic block diagram of an access system and a client for accessing data in a network according to an embodiment of the invention.

Fig. 1 illustrates a client 11, a proxy server 12, a data server 13, a temporary memory means 14 and a processing server 15.

The access system of Fig. 1 for example allows to reduce a communication load in a client and server scenario by providing the proxy server 12 as a proxy for the client 11 and by providing remote rendering of requested data on behalf of the client at the processing server 15. Instead of directly transmitting the requested data to the client, only a rendering result may be transmitted to the client 11.

In the following the parts of the embodiment shown in Fig. 1 will be described in further detail.

The client 11 may be a general purpose data processing device, a mobile terminal such as a mobile computing device, a mobile phone or a mobile data organizer operated by a user wishing to access data stored remote from the client 11 at the data server 13. Even though only a single client 11 is shown, it is understood that the shown embodiment is suited to serve requests from a plurality of clients.

The data server 13 may be a data processing device with a large memory for storing data. The data server may be connected to a network, e.g., a public network such as the Internet, and therefore data stored at the data server will be accessible from the outside, e.g. through the Internet. For simplicity reasons, only one data server is illustrated in Fig. 1, however, it is understood that an arbitrary number of data servers at arbitrary locations may be provided.

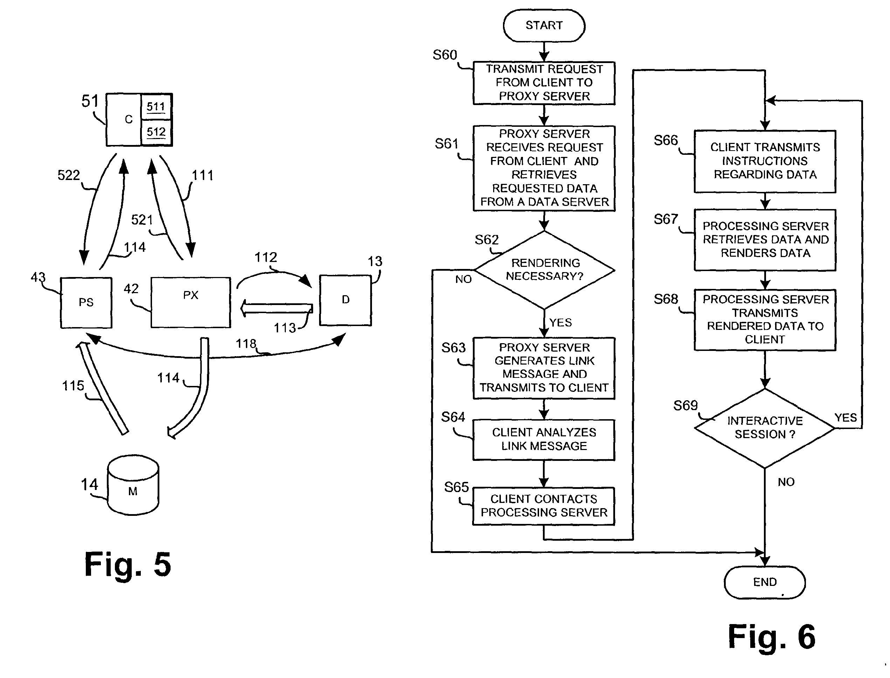

Further, the proxy server 12 may be constituted by a data processing device with large capacity for serving large numbers of client requests and may be registered at the client as a proxy. A proxy generally may be an agent authorized to act for another, e.g. in a communication with another data processing device, for example in the process of retrieving requested data. In the present case therefore the proxy server 12 is authorized to act on behalf of the client in retrieving data. Further, the proxy server determines whether a rendering, i.e. further processing or rewriting of the data is necessary before transmission to the client. Rendering may for example be desired in case the client does not have the necessary software tools to visualize the requested data, in case it is determined that the requested data should not be directly handled by the client itself to reduce latency, or in dependence on an application associated with the requested data or a type of operation to be performed with the requested data, as it will be outlined in further detail, for example with respect to Fig. 4.

The temporary memory means 14 may for example be a single memory device or a data base system including a plurality of individual memories and may be used by the proxy server 12 for intermediately storing data, e.g. retrieved from the data server 13.

The processing server 15 may be constituted by a data processing device with large capacity to serve a large number of client requests, e.g. by rendering requested data for the client 11, for example by running an application controlled via instructions from the client 11. The rendering operations performed by the processing server may include any processing or conversion steps to be executed on behalf of the client, for example converting data formats, rearranging data, providing selected parts of a data file for visualization and the like, as it will be outlined in further detail, e.g., with respect to Fig. 4.

In the following data transmissions in the embodiment of Fig. 1 will be described in further detail.

In the embodiment shown in Fig. 1, at least selected requests for data generated at the client 11 are not directly executed at the client 11, but instead transmitted to the proxy server 12, as illustrated by the arrow 111. The proxy server 12 transmits a request for the requested data on behalf of the client 11 to an appropriate location, in the shown embodiment data server 13, as illustrated by the arrow 112. The data server in response thereto transmits the requested data to the proxy server 12, illustrated by the arrow 113. The transmissions may involve for example a network such as the World Wide Web on the Internet or similar.

In case at the proxy server it is determined that rendering is not necessary, the retrieved data may be directly transmitted to the client. In case the proxy server 12 determines that rendering is necessary, the data retrieved from the data server 13 may be buffered or temporarily stored in the temporary memory means 14, as illustrated by an arrow 114.

Thereafter the processing server 15 accesses buffered or intermediately stored data and retrieves the requested data, as illustrated by an arrow 115, and renders the requested data appropriately. The processing server 15 may be informed of the required rendering steps by the proxy server 12, e.g. based on a message containing information on required applications, data formats and types of requests or instructions from the client. The information on the required rendering steps may be directly transmitted from the proxy server to the processing server. However, it is also possible that information on the required rendering steps is first transmitted from the proxy server 12 to the client 11 and then from the client to the processing server 15.

However, it is noted that the data may be directly transmitted from the proxy server to the processing server, without intermediate storage in the temporary memory means, for example in a real time scenario. In this case the temporary memory means 14 is not required.

Thereafter the rendered data are transmitted to the client for further handling and/or for visualization purposes, as illustrated by an arrow 116. The rendered data may be constituted by screen contents for visualisation, portions of documents or files for further processing such as editing, results of scientific calculations performed at the processing server and similar.

It is noted that the processing server 15 may render the requested data interactively under control of the client, based on instructions from the client e.g., in case a user wishes to scroll through a document or edit parts of a document.

Data transmission between the individual entities of the system shown in Fig. 1 may be accomplished via networks or dedicated communication links including wireless transmissions.

Further, it is noted that in case the proxy server 12, e.g. due to a previous request, already stored requested data in the temporary memory means 14, repeated retrieval of the same data files from a data server may be avoided by suitable measures, e.g., keeping a log of retrieved data files at the proxy server or by checking the temporary memory means upon receiving a request.

It is further possible that the access system for accessing data in a network comprises a proxy server 12 arranged for receiving a request for data from a client 11 and for determining whether the requested data have to be rendered before transmission to the client, and a processing server 15 arranged for rendering the data and for transmitting the rendered data to the client 11.

Since proxy server retrieves requested data on behalf of the client and the processing server renders the requested data, it can be avoided to transmit large amounts of data containing the originally requested data via communication links to and from the client. Instead only rendering results are transmitted to the client, potentially consisting of small amounts of data, e.g. screen contents for visualisation at the client and similar. Thus latency for accessing data from the client can be reduced, particularly in case the client communicates via low bandwidth connections, such as to and from a mobile terminal. Thus, the invention according to the above embodiment allows to reduce band width requirements.

Still further, in case it can be determined whether rendering is necessary without retrieving the requested data, e.g. at the proxy server or the client, it is possible that the requested data are not at all or not fully retrieved by the proxy server, but only information on the location of the requested data is transmitted to the processing server 15, for example a URL, as indicated by an arrow 117. The processing server can then retrieve the requested data from the data server in preparation of rendering, as indicated by an arrow 118.

In this case the proxy server may retrieve some of the requested data, for example a part of the requested data including data type information until a decision on rendering is possible and then stop retrieving the requested data. The already retrieved portion of the data may then be discarded. The temporary memory means 14 is not necessary in this case.

It is also possible that the client, upon generating a request, directly accesses the processing server, for instructing the processing server to retrieve and render the requested data.

It is noted that a computer readable medium may be provided, having a program recorded thereon, where the program is to make a computer or system of data processing devices execute functions of the above described elements, particularly of the proxy server and the processing server. A computer readable medium can be a magnetic or optical or other tangible medium on which a program is recorded, but can also be a signal, e.g., analog or digital, electromagnetic or optical, in which the program is embodied for transmission.

Further, a computer program product may be provided comprising the computer readable medium.

The functions of the processing server and the proxy server may be realized by executing code sections on a single data processing device. This data processing device may execute still further functions, such as functions of a web server or similar.

In the following a further embodiment of the invention will be described with respect to Fig. 2. Fig. 2 shows a flow diagram of steps performed in the method according to an embodiment of the invention, e.g. in case a client wishes to access data in a network.

The processing steps may be performed at the embodiment of the access system described with respect to Fig. 1, however are not limited thereto.

In a first step S21 a client generates a client request for data and transmits this request to a proxy server. The client may be configured to transmit all requests to the proxy server or only selected requests, e.g. selected in accordance with a type of request, type of data requested, data file sizes or similar.

In a step S22 the proxy server retrieves the requested data from a data server which may be accessible though a network of data processing devices such as a local area network or a wide area network. It is noted that the proxy server may omit the step of retrieving the requested data, in case the data were already retrieved at an earlier point in time and are locally available.

Then it is determined in a step S23, for example at the proxy server, whether a rendering of the retrieved data prior to transmission to the client is required. In case the decision is "YES", i.e. it is determined that rendering is necessary, the data are rendered in a step S24, for example by a processing server or by the proxy server. The rendering may be performed as outlined with respect to Fig. 1.

After performing the rendering operations rendered data are transmitted to the client in a step S25.

In case the decision in step S23 is "NO", i.e. it is determined that rendering is not necessary, the data are directly transmitted from the proxy server to the client.

It is noted that the sequence of steps may be varied, e.g. step S23 may be executed before step S22, as it may already be determined whether rendering is necessary before the requested data are retrieved.

According to the above processing steps, in case rendering is required, data requested by the client are not directly transmitted to the client but instead handled by the processing server and the proxy server and only rendering results are transmitted to the client. This allows to reduce latency.

It is noted that all processing steps described above may be realized by code sections for execution on a data processing system.

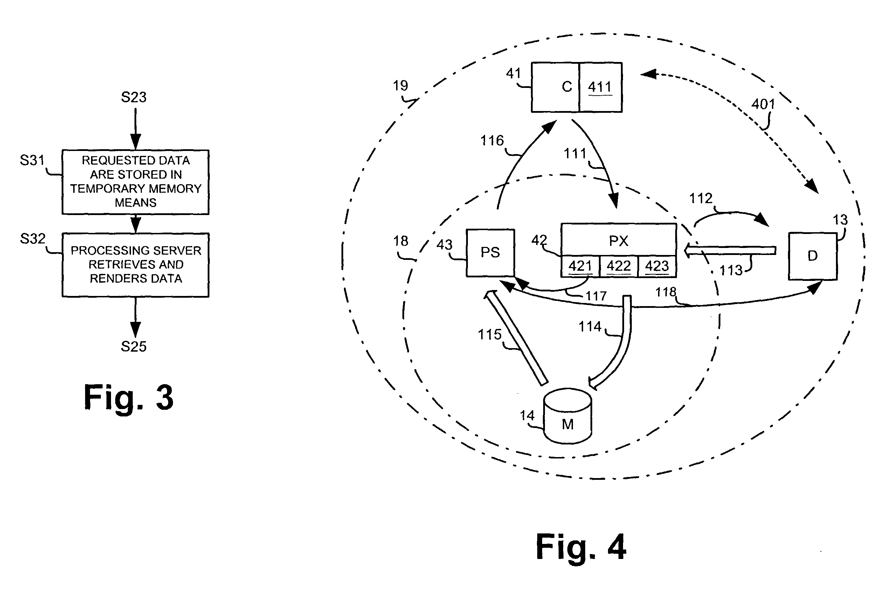

In the following a further embodiment of the invention will be described with respect to Fig. 3. Fig. 3 shows a flow diagram of steps performed for accessing data in a network according an embodiment of the invention. In particular, Fig. 3 shows an alternative sequence of steps as performed according to the previous embodiment described with respect to Fig. 2, in case it is determined that rendering is necessary in step S23 shown in Fig. 2.

In a step S31, after determining that rendering is necessary, the data retrieved at the proxy server are intermediately stored in temporary memory means. Thereafter, in a step S32 the temporarily stored data are retrieved by the processing server and rendered appropriately. After rendering the flow of processing steps continues as before described with respect to Fig. 2, i.e., the rendered data are transmitted to the client.

In the following a further embodiment of the invention will be described with respect to Fig. 4. Fig. 4 shows a schematic block diagram of an access system for accessing data in a network according to an embodiment of the invention.

As the embodiment described with respect to Fig. 1, the access system according to the embodiment of the invention shown in Fig. 4 allows to reduce a communication load in a client and server scenario by providing a proxy and remote handling of requested data on behalf of the client instead of transmitting the requested data to the client as it will be outlined in the following.

Further to the features of Fig. 1, the embodiment of Fig. 4 illustrates a local area network 18 and a wide area network 19. A client 41 includes a browser 411. Further, Fig. 4 shows a processing server 43, and a proxy server 42 including retrieving means 421, determining means 422 and storing means 423.

In the following the features shown in Fig. 4 will be outlined in further detail.

In Fig. 4 the proxy server 42, the processing server 43 and the temporary memory means 14 are connected through the local area network 18. The local area network may 18 be a single company wide network or similar, but is not limited thereto, it may also be constituted by a number of mutually connected individual networks.

Further, in Fig. 4 the local area network 18, the client 41 and the data server 13 are shown as connected via the wide area network 19, e.g. a public network such as the Internet. In this case data are exchanged between the local area network 18, the client 41 and the data server 13 via the wide area network 19. However, it is also possible that communication links between the client 41, the local area network 18 and the data server 13 are realized using dedicated lines of a telephone network or similar, including wireless communication links.

However, it is also conceivable that the entire system is located in a wide area network, and it is possible that the proxy server 12, the temporary memory means 14 and the processing server 43 as well as the data server 13 are part of the local area network 18, accessed from the outside by the client 41. In yet another scenario it is possible that all components of the system are part of a local area network.

The client 41 may be constituted by a general purpose data processing device, such as a personal computer, operated by a user who for example wishes to access information available on data server 13 remote from the client, such as text documents, images, movie clips, audio data and similar. The client may also be constituted by a mobile terminal such as a mobile computing device, a mobile phone or a mobile data organizer.

For accessing the desired information the client 41 may be provided with software for browsing information or transmitting data in data communication networks. In Fig. 4 a browser for browsing information or transmitting data in data communication networks is illustrated with reference numeral 411. Generally, a browser may be constituted by a piece of software which, when run at the client, allows to browse through a set of data, i.e., a program that may serve as a front end to the World Wide Web on the Internet. In this case, a user may enter an address of a web site into the browser's location field and a corresponding home page will be downloaded for local display. The downloaded information may, if visualized, serve as an index to other pages on the web site which can be accessed by clicking on for example a "click here" message, high-lighted text or an icon on the screen.

The client 41 may be connected to the wide area network 19, for example the Internet, or may be connected to any other network or may be directly linked to the local area network 18, for example a company-wide intranet. In both cases the client may be connected via a standard telephone line, ISDN, by a wireless connection or similar.

The client 41 preferably sends requests to the proxy server 42. This may be accomplished registering the proxy server 42 at the client 41 as a proxy, e.g., using registering means.

For example, an applications may provide an option to register another device as proxy by entering a network address and a port number into a specified location on a display, e.g. at a client.

As outlined before, a proxy may in general be realized as a software application that may for example run on a dedicated server that executes requests from a client entity on behalf of the client. Thus, in general a request from a client entity is routed through the proxy entity, which retrieves the requested information and transmits it to the client entity. However, it is also possible that the client 41 only sends selected requests to the proxy server 42, i.e., that the proxy server is registered at the client as a proxy only for selected requests, e.g., requests concerning certain documents, applications or data types or requests that require rendering, whereas all other requests may be directly executed by the client 41 without being routed through the proxy server, as indicated by a dashed line 401. Registration as a proxy may depend on the site to be accessed, i.e. be domain dependent. Thus Domains known to contain data requiring rendering would be accessed through the proxy server, whereas other domains could be accessed directly.

The request for data from the client 41 may be in a standard format, e.g. as used in packet switched networks. A request may, for example include an URL of a desired document.

The proxy server 42 in the embodiment of Fig. 4 comprises retrieving means 421, e.g. a retriever or a code section containing instructions for retrieving the requested data from data server 13 upon receiving the request for data from the client 41. Preferably this involves sending a request from the proxy server 42 to the data server 13. The data server then obtains the requested data from its memory and transfers the requested data back to the proxy server 42. As before, the data server 13 may be any server of a public network, such as the Internet, or may be a server of a local area network, such as a company-wide intranet. The retrieving means may also be constituted by a programmed data processing unit or realized in hardware.

Determining means 422 at the proxy server are provided for determining whether the requested data have to be rendered before transmission to the client. The determining means 422 may for example be realized by a calculation unit or by a code section containing instructions for determining whether rendering is necessary, for execution on a data processing device, e.g. the proxy server itself or a data processing device connected to the proxy server. The retrieving means may thus be constituted by a programmed data processing unit or be realized in hardware.

Rendering may for example be needed in case the client does not have the necessary software tools to visualize the requested data. Information on software tools available at the client may for example be transmitted from the client to the proxy server with the request for data or may be provided with client specific information available at the proxy server. For example, client specific information specifying browser capabilities or software tools available at the client could be stored beforehand in a client file in a memory which is accessible from the proxy server. The client specific information could be generated at the time when the client logs onto the proxy server and upon receiving a request the proxy server could retrieve and analyse the client file and a decision whether rendering is required could be based on the analysing result. The client specific information could also include user preferences configured beforehand at the client, specifying cases where rendering is desired.

Further, rendering may also be required in case it is determined that the requested data should not be directly handled by the client itself, e.g., in dependence on a file size of the requested data, as large file sizes introduce high latency, particularly in case the client is connected to the network through a low bandwidth communication link and/or in case the client has a low capacity central processing unit. For example, rendering could be decided to be necessary in case the client is communicating through a low bandwidth communication link such as a standard telephone line or a wireless link, and requests concerning documents with a file size larger than, e.g. 1 Mbyte are received at the proxy server.

Further, rendering could be decided to be necessary in case a request has high processing demand and the client is constituted, e.g. by a small size mobile device such as a mobile phone or a mobile organizer with limited processing capabilities.

Rendering may also be required in dependence on an application associated with the requested data or the type of operation to be performed with the requested data, e.g. in case a small part of a bitmap image is to be visualized at the client or in case only selected pages of a large document are to be displayed at the client, e.g. for scrolling through a document or for editing a part of a document.

It is noted that it is also possible that information whether rendering is desired is transmitted with the request for data from the client, e.g. contained in an URL. For example, it may be determined with request whether a document should be opened locally, i.e. without rendering, or whether the document should be rendered, i.e. handled remotely, and only data frames for display should be transmitted to the client. In this case the determining means 422 analyses the request from the client in order to determine whether rendering is necessary.

It is further noted that the decision on rendering may in some cases be reached without retrieving the requested data or only part of the requested data by the proxy server, e.g. based on the request from the client or header information of the requested data.

In case the determining means 422 concludes that the request received from the client 41 does not require any rendering steps, i.e., further processing or rewriting of data, the proxy server 42 may directly transmit the requested data to the client 41. However, it is noted that also in this case the proxy server may perform operations on the requested data, e.g., format conversions or similar.

In case it is determined that the requested data need to be rendered before transmission to the client, storing means 423 at the proxy server may be used to store the requested data in temporary memory means 14. The storing means may be realized by code executed on a data processing device or may also be realized in hardware. The temporary memory means 14 may for example be a local data base for storing and handling different types of content information or any other memory. The temporary storage means can be directly connected to the proxy server or accessible through the local area network 18.

The processing server 43 is preferably constituted by a data processing device with high capacity and having the resources for further rendering the requested data temporarily stored in the temporary memory means 14 before transmission to the client. The processing server 43 is in communication with the temporary memory means 14, retrieves the data temporarily stored in the temporary memory means 14 and performs the needed steps for rendering.

The rendering at the processing server 43 may, for example, include converting data formats, e.g., in order to convert a requested document into a format which can be handled at the client, depending on the processing and visualization capabilities of the browser at the client. If for example the request from the client is related to a document which may not be directly visualized at the client, the processing server may invoke an application for converting the document into a format which may be visualized at the client, for example a HTML document or bitmap image. This may involve communication between the client and the processing server based on a bitmap protocol or X Windows protocol.

Rendering may also include rewriting contents when dynamically generating web pages. If for example only a part of a document is to be visualized at the client for reading or editing purposes, the processing server 43 may perform processing steps to provide the client with the requested parts of the document. Further, the processing server 43 may receive an edited portion of a document from the client 41 and perform processing steps to introduce the edited portion of the document back into the original file for storing purposes. This is particularly useful in case the client and the processing server are involved in an interactive session for manipulating data, wherein the data reside at the processing server 43 and are manipulated via instructions from the client.

The information on the required rendering steps may be transmitted from the proxy server 42 to the processing server 43. However, it is also possible that information on the required rendering steps are first transmitted from the proxy server 42 to the client 41 and then used by the client to generate a message for transmission to the processing server 43, the message including for example an identifier of the requested data and/or information on communication protocols and/or data types and similar.

After rendering the requested data are transferred from the processing server 43 to the client 41 for further handling or visualization.

Communication between the client 41 and the processing server 43 may include a bitmap protocol or X Windows protocol or similar. This may involve establishing a bidirectional connection between the client and the processing server, allowing the transmission of a sequence of rendering instructions from the client to the processing server in an interactive session, e.g., for scrolling through a document or for editing purposes or for displaying parts of image data such as a bitmap.

Transmission of data from the processing server to the client may be accomplished via a direct connection, through a packet switched connection and may involve a wireless communication link.

It is noted that the processing server may also be arranged to transmit the rendered data to the client on a return path including the proxy server, such that the client receives the rendered data via a connection established between the client and the proxy server.

It is further noted that the functionalities of the processing server 43, the proxy server 42 and the temporary memory means 14 may be realized by executing code sections on one or more data processing devices and all required data transmissions, specifically between the processing server, the temporary memory means and the proxy server may be handled via local buses or network connections.

Further, the above embodiment may be used to allow access to services not directly "visible" at the client, e.g. accessible through URL's not known at the client. These may be services of a particular local area network, intranet or similar. In this case it is possible to rewrite access information of the services not known at the client, e.g. the URL's, such that the client transmits the corresponding request to the proxy server. The rewriting could be performed at a server or at the client, provided that information on the specific services to be requested from the proxy server are accessible at the server or client.

In the described scenario generally the link to the client may have low bandwidth due to a modem connection or similar, whereas the transmission links between the proxy server, the temporary memory means, the processing server and the data server will likely have high throughput. Since requested data may be rendered at the processing server, and only rendering results, e.g. frames for local display at the client are transmitted to the client, the system will introduce low latency even in case large size documents are to be handled. Thus, the invention according to the above embodiment allows to reduce band width requirements, to reduce latency and allows access to resources in an intranet not directly visible from a client.

Still further, in case it can be determined whether rendering is necessary without retrieving the requested data, e.g. at the proxy server or the client, it is possible that the requested data are not at all or not fully retrieved by the proxy server, but only information on the location of the requested data is transmitted to the processing server 15, for example a URL, as indicated by an arrow 117. The processing server can then retrieve the requested data from the data server in preparation of rendering, as indicated by an arrow 118.

In this case the proxy server may retrieve some of the requested data, for example a part of the requested data including data type information until a decision on rendering is possible and then stop retrieving the requested data. The already retrieved portion of the data may then be discarded. The temporary memory means 14 is not necessary in this case.

In the following a further embodiment of the invention will be described with respect to Fig. 5. Fig. 5 shows a schematic block diagram of an access system for accessing data in a network according to another embodiment of the invention.

The embodiment shown in Fig. 5 is similar to the embodiment shown with respect to Fig. 4, however, the requested data, after being intermediately stored in the temporary memory means, are rendered and transmitted to the client only upon request from the client.

Fig. 5 illustrates a client 51 including a data handler 511 and pre-selection means 512, a proxy server 42, the data server 13, the temporary memory means 14 and the processing server 43.

In the scenario shown in Fig. 5 the client, upon emitting a request for data to the proxy server 42 as illustrated by arrow 111, e.g. containing an URL, the proxy server 42 generates a dummy response or link message 521 for instructing the client to redirect the request for data to the processing server 43. This may be accomplished by a code section containing instructions executed at the proxy server or by dedicated hardware.

The link message may include information on the storage location of the requested data, e.g. an URL or similar, specifying the storage location in the temporary memory means 14. Further, the link message may include address information of the site responsible for further processing or rendering of the requested data, e.g., of the processing server 43, and may include information needed for establishing a communication link to the processing server 43. Address information of the site responsible for rendering of the requested data is particularly useful, in case a plurality of processing servers is provided.

However, it is also possible that the client may be configured to connect to a predetermined site upon receiving a link message, e.g. to the processing server 43, in which case the link message does not need to contain address information of the site responsible for rendering of the requested data.

The link message may further include information on required rendering steps and may include information on the data type or format of the requested data after rendering, particularly in case the data format will change during rendering, e.g., a MIME type.

The link message may also include user information, e.g. a password for authentication purposes and/or a session identifier (session ID). A session ID may be particularly useful in case the client previously generated a similar request for data and the processing server already launched a required application for rendering beforehand and/or already accessed the requested data.

The link message will be transmitted from the proxy server 42 to the client 51 as illustrated by an arrow 521. Accordingly, instead of an expected response, e.g., containing requested data, the client receives from the proxy server a message indicating that the data may not be obtained from the proxy server 42 but from another site.

The client 51, upon receiving the link message from the proxy server 42, preferably analyses the link message and generates a corresponding request for the processing server 43 concerning the requested data and transmits same to the processing server as illustrated by an arrow 522.

This request may specify the expected data, e.g. an URL, and/or data type information and/or information on execution of a particular protocol at the client.

The processing server 43 in response to receiving the request from the client 51 preferably accesses the temporary memory means 14 and loads the originally requested temporarily stored data. Then, after performing the required rendering steps, as outlined before in detail with respect to previous embodiments, the processing server may transmit the rendered data to the client 51 for further handling and/or visualization purposes.

The client 51 may further comprise the data handler 511 and upon receiving the dummy response from the proxy server 42, may activate the data handler 511 for establishing a communication link between the client 51 and the processing server 43 and/or for handling data from the processing server 43.

The data handler 511 may be realized by a hardware unit or by executing a code section containing instructions on a data processing device for establishing a communication link between the client and the processing server and to generate commands for execution by the processing servers to manipulate the requested data and/or to visualize or further process received information. The data handler 511 may include e.g. a suitable plug-in such as a suitable plug-in, tools for page by page viewing, Active-X control, Java applet or similar.

For example, the data handler 511 may be started upon receiving the link message from the proxy server and further, the link message may include information for allowing the data handler to contact the processing server 43 for establishing the communication link. When the communication link is established, the data handler may instruct the processing server to retrieve the requested data and further, the data handler may instruct the processing server to render the requested data as required, e.g., to scroll through a document, to transmit a page content for editing purposes and similar. Upon receiving corresponding data from the processing server the data handler may activate a display at the client or initiate further handling of the data.

The client may thus comprise an analyser to receive and analyse data from the access system and to activate the data handler for handling the rendered data.

In case more than one data handler is available at the client, the data handler to be activated at the client may be determined by the proxy server 42 through information included into the link message.

Further, the client may comprise means for registering the proxy server at the client as a proxy, and a retriever to retrieve the rendered data from the processing server 43, e.g. realized by a hardware unit or by a code section containing instructions for execution on a data processing device.

The client may also comprise pre-selection means 512, e.g. constituted by a calculation unit or constituted by a code section containing instructions for performing a pre-selection of requests for data into requests requiring rendering of data and requests not requiring rendering of data and for transmitting requests requiring rendering to the proxy server 42 and for directly retrieving data, e.g. from a public network, in case it is determined that the requested data do not require rendering before transmission to the client. The pre-selection means may be located at the client and may also be realized by a hardware unit or by a code section containing instructions for execution on a data processing device.

Decisions regarding rendering at the pre-selection means 512 may be based on user preferences previously configured.

User preferences may be set with respect to file sizes. For example, in case the client generates a request concerning a document exceeding a predetermined size, rendering may be decided to be necessary. User preferences may also concern desired activities, such as scrolling through a document, editing parts of a document and similar. Further, user preferences may concern bandwidth of a communication link available at the client, processing capabilities at the client or similar.

Still further, decisions for rendering or not at the pre-selection means may depend on requested data types and availability of processing tools at the client. The decision for rendering or not may also be based on the fact that a domain to be accessed upon a request is part of a predetermined group of domain names, e.g. domains storing data which are known to require rendering.

In case the pre-selection means 512 determines that rendering is not required, the client may directly access a data server, such as data server 13 and retrieve the requested data.

It is noted that all functionalities of the client, including the pre-selection means may be realized by executing code sections on a data processing device.

Still further, in case the proxy server can determine whether rendering is necessary without retrieving the requested data, it is possible that the requested data are not fully or not at all retrieved by the proxy server but only information on the location of the requested data is included in the link message for transmission to the client as indicated by the arrow 521, for example a URL. The client may then include the information on the location of the requested data into the request for transmission to the processing server 43 concerning the requested data as illustrated by an arrow 522.

The processing server could then retrieve the requested data directly from the data server in preparation of rendering, as indicated by an arrow 118. The temporary memory means 14 is not necessary in this case.

The proxy server may still retrieve at least some of the requested data, for example a part of the requested data including data type information, until a decision on rendering is possible and then stop retrieving the requested data. The already retrieved portion of the data may thereafter be discarded.

In the following a further embodiment of the invention will be described with respect to Fig. 6. Fig. 6 shows a flow diagram of steps performed according to an embodiment of the invention, e.g. according to the embodiment outlined with respect to Fig. 5.

In a first step S60 a client transmits a request to the proxy server. The request for data from the client may be in a standard format, e.g. as used in packet switched networks. A request may, for example include an URL of a desired document, information on a client identity, a requested application, and similar.

In a step S61 a proxy server receives a request for data from a client and retrieves the requested data from a data server, as it was outlined with respect to previous embodiments. It is noted that in case the requested data were already previously received from a data server and temporarily stored in the temporary memory means, the requested data do not have to be again retrieved from the data server, instead, it can be determined at the proxy server using a log of client requests or by inquiring at the temporary memory means which data were already retrieved, reloading of data may be avoided. In this case download of requested data from the data server may be started but after retrieving information of the requested data from the data server, the download could be interrupted in case it is determined that the requested data are already stored in the temporary memory means.

Thereafter, in a step S62 the proxy server determines whether rendering is necessary, e.g. based on the retrieved data, information on processing capabilities at the client or depending on a file size of the requested data, transmission bandwidth, processing bandwidth and similar, as outlined before.

In case rendering is determined not to be necessary, i.e. the decision in step S62 is "NO", the data may be directly transmitted to the client and the flow ends.

In case the proxy server determines that rendering is necessary, i.e. the decision in step S62 is "YES", in a step S63 the proxy server generates a link message and transmits the link message to the client. As outlined before, the link message may include address information of the requested data indicating a storage location in the temporary memory means, such as an URL. Further, the link message may specify a host for performing the rendering, preferably the processing server. Furthermore, the link message may contain information allowing the client to establish a communication link to the processing server and finally, the link message may contain a user identifier (user ID) and/or a session identifier (session ID) specifying a communication link to the processing server.

In a step S64 the client receives and analyses the link message from the proxy server. In case the link message contains information on a protocol to be started in order to communicate with the processing server, corresponding software tools may be started at the client in order to contact the processing server. After establishing a communication link between the client and the processing server 15 the client in a step S66 transmits instructions regarding the requested data to the processing server.

In a step S67 the processing server retrieves the requested data and renders the data, preferably according to the requests received from the client and in a step S68 the processing server transmits the rendered data to the client.

In a step S69 the processing server determines whether the client started an interactive session, e.g. whether the client wishes to control an application program running at the client.

In case the client started an interactive session the flow returns to step S66 wherein the client transmits further instructions regarding the requested data. For example, in case the session concerns the visualization of a document including scrolling, further instructions from the client could relate to scrolling through the document. Further, in case parts of a document should be edited, further instructions could specify parts of a document to be edited. In this case, after editing the edited part of the document would be transmitted back from the client to the processing server and introduced into the document.

In case the client and processing server are not involved in an interactive session, the flow of processing steps ends.

It is noted that all processing steps described with respect to Fig. 6 may be realized by a program or code sections executed on a system of data processing devices.

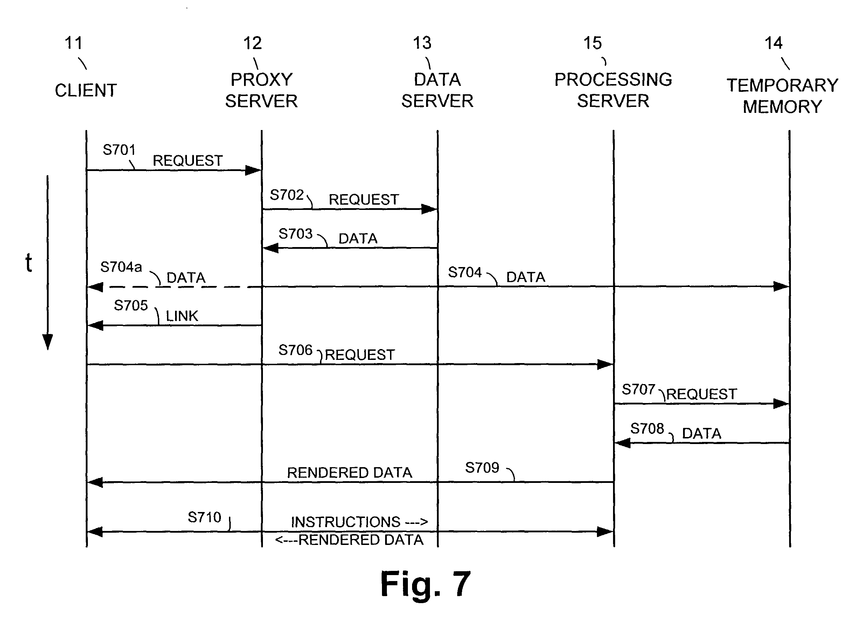

In the following a further embodiment of the invention will be described with respect to Fig. 7. Fig. 7 shows a flow of messages transmitted between the different entities of an access system according to an embodiment of the invention.

In Fig. 7 messages are transmitted between the client 11, for example a client application or browser, the proxy server 12, the data server 13, the processing server 15 and the temporary memory means 14. The vertical lines indicate evolving time t in downward direction at each entity of the system.

In a step S701 a request for data is generated at the client 11 and is transmitted to the proxy server 12. This request may, for example, include an URL concerning a "StarWriter" (.sdw) document, a data format part of the "StarOffice" suite. The client may be involved in a direct communication with the proxy server or through a packet switched network, including wireless connections. In case of a packet switched network the request may include a URL which may be translated by a DNS (directory network server) into an IP-address (internet protocol address) and a port number, e.g. port 80 for a HTTP (hypertext transport protocol) connection for a HTML (hypertext markup language) document.

The proxy server is preferably registered at the client as proxy, and therefore requests generated at the client will be sent to the proxy server for further handling.

Upon receiving the request from the client 11, the proxy server 12 forwards the request in a step S702 to the data server 13, preferably including his own network address. Since, as for example common in network applications with packet transmission, a request may preferably include origination address and destination address, upon receiving the request transmitted in step S702 to the data server, the data server retrieves the requested data, e.g. from its memory and transmits the data back to the proxy server 12 in a step S703.

After receiving the requested data, the proxy server 12 determines whether the retrieved data need to be rendered, i.e. further processed or rewritten, before being transmitted to the client for further handling including visualization, as it was outlined with respect to the previous embodiments

The step of determining whether rendering is necessary may be executed at the proxy server 12 before or after receiving the requested data. In case it is not possible to determine from the request itself, as transmitted from the client 11, whether the requested data need to be rendered, the requested data will preferably be retrieved first.

In case it is determined that the data need to be rendered, the requested data are transmitted in a step S704 from the proxy server 12 to the temporary memory means 14 for temporary storage.

In case it is determined that the requested data do not have to be rendered or further processed, as the client may or should itself handle the data, they may directly be transmitted from the proxy server to the client without further processing, shown in Fig. 7 at a step S704a.

After retrieving the requested data from the data server and determining that rendering is required, the proxy server 12 proceeds to generate a link message to the requested data stored in the temporary memory means 14 and transmits the link to the client 11 in a step S705.

It is noted that the steps of generating the link to the data and storing the data and determining whether rendering is necessary do not necessarily have to be performed in the shown order, in case by examining the data request from the client a decision whether rendering is required or not may already be reached.

The link to the data generated at the proxy server 12 and transmitted to the client in step S705 preferably contains address information of the requested data stored in the temporary memory means 14 and may further contain data type information describing the requested data, as outlined with respect to the previous embodiments. This data type information may differ from the original data type information of the data retrieved from the processing server as the retrieved data are to be rendered in order to put them into a format which may be handled, e.g. by the browser at the client. The address information may be constituted by an URL, as common in packet transmission, and the data type information may be a MIME type.

The link does not contain the requested data and the client will use the link information to proceed to retrieve data from the temporary memory means 14.

Therefore, the client 11 in a step S706 sends a request based on the link information to the processing server 15. It may be predetermined that any request upon receiving a link is transmitted from the client 11 to the processing server 15. However, is further possible that the link contains further information on a destination site for a request generated upon receiving the link message at the client.

The processing server 15, upon receiving the request in step S706, retrieves the requested data from the temporary memory means 14 in steps S707 and S708. In the shown embodiment the data are transmitted from the temporary memory means to the processing server upon receiving a request in step S707, however, the temporary memory means may be directly connected to the processing server, i.e. maybe a database which may be directly accessed by the processing server, e.g., via a system bus.

The processing server upon receiving the requested data performs the required rendering steps. The rendering may be performed as outlined before with respect to previous embodiments and may for example be based on the received data format and on the availability of processing tools for data formats at the client. Information on the particular rendering steps required may be contained in the request transmitted from the client application to the processing server in step S706 or may be notified by the proxy server 12 upon receiving the request from the client 11 and retrieving the requested data from the data server 13.

The rendered data are then transmitted from the processing server 15 to the client 11 in a step S709.

For further rendering of the requested data, for example in case a further page of a document is to be displayed at the client, the client and the processing server may exchange instructions and correspondingly rendered data in a step 710, e.g. scrolling instructions and page contents for display at the client. The exchange of instructions and rendered data may be repeated.

All processing steps described with respect to Fig. 7 may be realized by a program or code sections executed on a system of data processing devices. All transmissions described with respect to Fig. 7 may be performed via networks, such as packet-switched networks, however, it is also possible that certain messages or notifications, e.g. as executed in steps S707 and S708 are executed via a system bus.

Upon receiving the requested data, the client may perform further processing steps for handling the retrieved data, including visualization or similar.

It is also possible that the proxy server 12 instructs the client 11 via the link message transmitted in step S705 to activate a data handler 411 in preparation of receiving and further processing the rendered data. The data handler may use a URL contained in the link to retrieve the requested rendered data from the processing server.

However, it is also possible that only upon receiving the rendered data the client starts the required data handler.

As an example of data transmissions executed in accordance with the embodiment described with respect to Fig. 7 it is assumed that the client requests a StarWriter document with the content type "application/starwriter" from the proxy server. The document is assumed to have an original data size of 1 MB. The proxy server will retrieve and intermediately store the requested document and in case rendering is decided to be necessary, the proxy server will generate a link message for example including a content type application/starwriter-url and a content with a link message containing for example "http://proxy-xyz/temp/123456" specifying the storage location of the retrieved data. The data size of the data actually transmitted from the proxy server to the client will thus be reduced to 28 bytes, which is the size of the link message content. Thereafter the processing server will perform the rendering as required and transmit only the rendered data to the client, e.g. screen contents for local display. Thus the amount of data actually transmitted to the client, i.e. the link message from the proxy server and the rendered data from the processing server, will be substantially less than the original document.

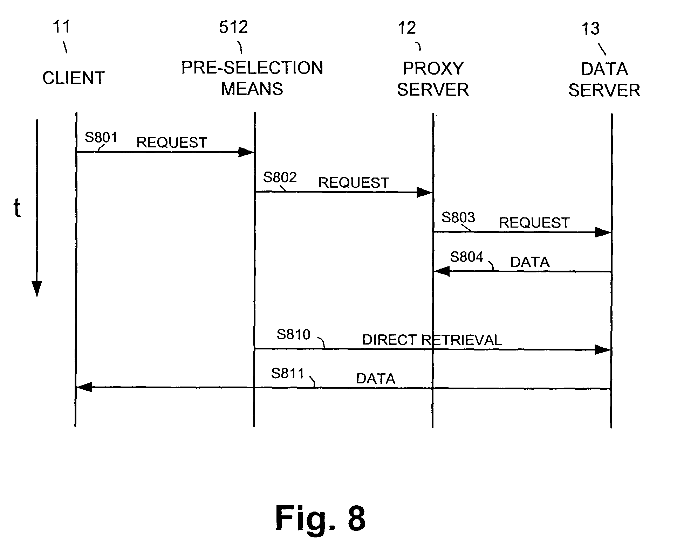

In the following a further embodiment of the invention will be described with respect to Fig. 8. Fig. 8, similar to Fig. 7, shows a time sequence of events occurring at the client 11, the pre-selection means 512, the proxy server 12 and the data server 13.

In a step S801 a request for data is transmitted from the client to the pre-selection means. The request for data from the client corresponds to the request for data transmitted in step S701 in Fig. 7, with the only difference that it is not transmitted to the proxy server, but to the pre-selection means. The pre-selection means 512 may be realized as a hardware unit or as a code section containing instructions for execution at a data processing device. The pre-selection means 512 may be located at the client or may be located remote to the client and performs a pre-selection of requests for data into requests requiring rendering of data and requests not requiring rendering of data and for transmitting requests requiring rendering to the proxy server and directly retrieves data in case it is determined that the requested data do not require rendering before transmission to the client.

The pre-selection may be based on the data type of the requested data and thus may be obtained from the request itself or may be determined based on further heuristics. It is also possible that the pre-selection depends on a domain name included into the request, as outlined before.

In case it is determined at the pre-selection means that a request requiring rendering is present, this request is transmitted from the pre-selection means 512 to the proxy server 12 in a step S802.

In this embodiment the proxy server is preferably registered at the client, i.e., at the pre-selection means as a proxy for all requests determined at the pre-selection means to require rendering, all other requests are directly executed.

The proxy server forwards the request to the data server 13 in step S803 and which transmits the requested data in step S804 to the proxy server 12. These steps correspond to steps S702 and S703 described with respect to Fig. 2.

Thereafter the proxy server confirms whether rendering is indeed required, based on the retrieved data, and stores the data in the temporary memory means or transmits the data back to the client, depending on the determination result, as for example described with respect to previous embodiments. The rendered data may be transmitted from the processing server 15 to the client 11 directly or may be transmitted from the processing server through the pre-selection means 512 to the client 11.

The subsequent steps executed for rendering and transmitting the rendered data to the client correspond to the further steps previously described with respect to Fig. 7.

However, if it is determined at the pre-selection means 512 that a request for data was received from the client 11 which does not require rendering of data, a direct retrieval message is sent from the pre-selection means to the data server 13 in step S810, e.g. via a packet-switched network. The data server 13 upon receiving the message from the pre-selection means transmits the data either directly to the client 11 or through the pre-selection means.

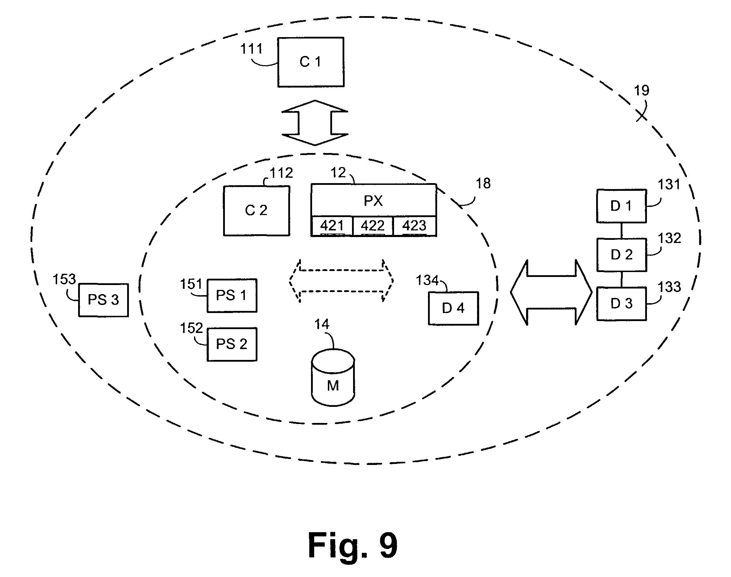

In the following a further embodiment of the invention will be described with respect to Fig. 9. Fig. 9 shows a schematic block diagram of functional entities of an access system according to an embodiment the invention.

A first client denoted with reference numeral 111 is shown to be part of public network 19. A second client denoted with reference numeral 112 is shown as part of the local area network 18. The first client 111 may be connected to the local area network via the wide area network or directly via a dedicated communication line such as a telephone line. Data transmission may be encrypted.

Further, Fig. 9 shows three processing servers 151, 152 and 153, wherein processing servers 151 and 152 are part of the local area network 18 and wherein the third processing server 153 is part of the public network.

Still further, Fig. 9 shows four data servers 131, 132, 133 and 134, wherein the data servers 131, 132 and 133 are part of the wide area network 19 and the fourth data server 134 is part of the local area network 18. Of course, an arbitrary number of clients, proxy servers, processing servers and data servers may be provided inside the local area network and/or in the wide area network.

In case a request for data is generated by the first client 111, it will be transmitted either via a dedicated line or the wide area network 19, e.g., including wireless transmission, to the local area network and to the proxy server 12.

In case a request for data is generated at the second client 112, which is part of the local area network 18, it will be transmitted through the local area network to the proxy server 12.

Upon receiving the request from any of the shown clients, the proxy server 12 will retrieve the requested data from an appropriate one of the data servers 131, 132, 133 and 134. In case the corresponding data server is part of the local area network, the retrieval of the data by the proxy server may be executed through the local area network, in case the data server is part of the wide area network 19, the requested data will be transmitted from the wide area network to the local area network. This transmission may cross a firewall (not shown), protecting the local area network from unauthorized access from the outside.

A firewall generally is a method for keeping a network secure. It can for example be implemented in a router that filters out unwanted packets, or it may use a combination of technologies in routers and hosts. Firewalls may be used to give users access to public networks in a secure fashion as well as to separate a company's public Web server from its internal network. They may also be used to keep internal network segments secure.

The proxy server, as for example described with respect to Fig. 4, stores the retrieved data in the temporary memory means 14 and may generate a link message containing address information of the stored data for transmission to the requesting client. Preferably, the link may contain address information on an appropriate processing server determined by the proxy server for further handling of the data request.

Upon receiving the link message, the client will then connect to the processing server determined by the link and transmit a request for data using the further information contained in the link.

However, it is also possible that the request from the client upon receiving the link from the proxy server is distributed among the available processing servers according to availability by a different entity. In this case a determined processing server need not be specified in the link from the proxy server.

Thereafter, as already outlined with respect to previous embodiments, the processing server receiving the request from the client will precede to retrieve the requested data from the temporary memory means 14 and will render the retrieved data as outlined before. The rendered data will then be transmitted to the requesting client for further processing or visualization.

It is noted that is also possible that a plurality of proxy servers and temporary memory means is provided in order to provide scalability of the system. In this case requests from the clients may be transmitted to a proxy server depending on availability, communication load or physical location of the client and respective proxy server.

It is noted that the different entities of the system are not necessarily distributed over a public network and a local area network, it is possible that communications are executed via a single network.

According to another embodiment of the invention, an access system may be constituted as follows:
1) Access system for accessing data in a network, comprising:
   a proxy server 12; 42 having a code section including instructions for receiving a request for data from a client 11; 111, 112; 41; 51 and for determining whether the requested data have to be rendered before transmission to the client; and
   a processing server 15; 151, 152, 153; 43 having a code section including instructions for rendering the data and for transmitting the rendered data to the client 11; 111, 112; 41; 51.
2) Access system according to 1), wherein
   the proxy server includes a code section containing instructions for retrieving the requested data from a data server 13; 131, 132, 133, 134, and storing means 423 for storing the requested data in temporary memory means 14 if it is determined that the requested data have to be rendered before transmission to the client; and
   the processing server 15; 151, 152, 153; 43 further includes a code section containing instructions for retrieving the data stored in the temporary memory means 14.
3) Access system according to 1), wherein
   the proxy server 12; 42 includes a code section containing instructions for transmitting address information of the requested data to the processing server 15; 151, 152, 153; 43, and
   the processing server includes a code section containing instructions for retrieving the requested data from a data server 13; 131, 132, 133, 134 using the address information.
4) Access system according to 2) or 3), wherein the proxy server 12; 42 includes
   a code section containing instructions for generating a link message containing address information of the requested; and
   a code section containing instructions for transmitting the link message to the client 11; 111, 112; 41; 51.
5) Access system according to 3), wherein the link message further includes at least one of the group consisting of
   address information of the processing server,
   data type information describing the requested data,
   a client identifier, and
   a session identifier.
6) Access system according to 3), wherein the address information of the requested data is constituted by an URL and the data type information by a MIME type.
7) Access system according to 3), comprising at the client a data handler 511 including a code section containing instructions for establishing a communication link between the client and the processing server and for receiving the rendered data from the processing server 15; 151, 152, 153; 43.
8) Access system according to 1), wherein the proxy server 12; 42 includes a code section containing instructions for direct transmission of the requested data to the client in case it is determined by determining means 422 that the requested data do not have to be rendered before transmission to the client.
9) Access system according to 1), wherein the client 11; 111, 112; 41; 51 includes a code section containing instructions for performing a pre-selection of requests for data into requests requiring rendering of data and requests which do not require rendering of data and for transmitting requests requiring rendering to the proxy server 12; 42, and for directly retrieving data in case it is determined that the requested data do not require rendering before transmission to the client.
10) Access system according to 2) or 3), wherein at least the proxy server 12; 42, the processing server and the temporary memory means are connected by a local network 18.
11) Access system according to 1), comprising
   a plurality of processing servers;
   a code section containing instructions to determine at least one of the processing servers for rendering; and
   wherein the proxy server 12; 42 includes a code section containing instructions for receiving requests for data from a plurality of clients and for retrieving data from a plurality of data servers 13; 131, 132, 133.
12) Access system according to 1), wherein the processing server 15; 151, 152, 153; 43 includes a code section containing instructions for transmitting the rendered data to the client 11; 111, 112; 41; 51 on a return path including the proxy server 12; 42.
13) Access system according to 1), wherein the processing server and the proxy server are constituted by a single data processing device.
14) A client may be adapted to cooperate with the access system according to 1), comprising
   a code section containing instructions to generate a request for data,
   a code section containing instructions to receive and analyse a link message from the access system; and
   a code section containing instructions for establishing a communication link between the client and the processing server and for receiving rendered data from the processing server.
15) The client according to 14) may comprise a code section containing instructions for performing a pre-selection of requests for data into requests requiring rendering of data and requests which do not require rendering of data and for transmitting requests requiring rendering to the proxy server 12; 42, and for directly retrieving data at the client in case it is determined that the requested data do not require rendering before transmission to the client.
   According to another embodiment of the invention, a proxy server of the access system may be constituted as follows:
16) Proxy server for accessing data in a network, comprising
   a code section containing instructions for receiving a request for data from a client 11; 111, 112; 41; 51,
   a code section containing instructions for determining whether the requested data have to be rendered before transmission to the client, and
   a code section containing instructions for authorizing a processing server 15; 151, 152, 153; 43 for rendering the data and for transmitting the rendered data to the client 11; 111, 112; 41; 51.
17) Proxy server according to 16) comprising
   a code section containing instructions for retrieving the requested data from a data server 13; 131, 132, 133, 134,
   a code section containing instructions for storing the requested data in temporary memory means 14 if it is determined that the requested data have to be rendered before transmission to the client, and
   a code section containing instructions for authorizing the processing server 15; 151, 152, 153; 43 to retrieve the data stored in the temporary memory means.
18) Proxy server according to 16), wherein the proxy server includes a code section containing instructions for transmitting address information of the requested data to the processing server (15; 151, 152, 153; 43) for instructing the processing server to retrieve the requested data from a data server (13; 131, 132, 133, 134) using the address information.
19) Proxy server according to 15) or 16) comprising
   a code section containing instructions for generating a link message containing the address information of the requested data; and
   a code section containing instructions for transmitting the link message to the client 11; 111, 112; 41; 51.
20) Proxy server according to 19) wherein the link message further includes at least one of the group consisting of
   address information of the processing server,
   data type information describing the requested data,
   a client identifier, and
   a session identifier.
21) Proxy server according to 16), comprising a code section containing instructions for activating a data handler 511 to establish a communication link between the client and the processing server and to receive the rendered data from the processing server 15; 151, 152, 153; 43.
22) Proxy server according to 16) comprising a code section containing instructions for direct transmission of the requested data to the client in case it is determined by determining means 422 that the requested data do not have to be rendered before transmission to the client.
   According to another embodiment of the invention, a processing server of the access system may be constituted as follows:
23) Processing server adapted to cooperate with the proxy server according to one of 16) - 22), comprising
   a code section containing instructions for receiving an instruction message to render data requested by a client 11; 111, 112; 41; 51,
   a code section containing instructions for retrieving the requested data from a temporary memory means 14,
   a code section containing instructions for rendering the data, and
   a code section containing instructions for transmitting the rendered data to the client.
24) Processing server according to 23), comprising a code section containing instructions for receiving an instruction message from a data handler 511 at the client to establish a communication link between the client and the processing server 15; 151, 152, 153; 43.
25) Processing server according to 23), comprising a code section containing instructions for retrieving the requested data based on address information from at least one of
   a temporary memory means (14), and
   a data server (13; 131, 132, 133, 134).

## Claims

1. Access system for accessing data in a network, comprising:
a proxy server (12; 42) arranged for receiving a request for data from a client (11; 111, 112; 41; 51) and for determining whether the requested data have to be rendered before transmission to the client; and
a processing server (15; 151, 152, 153; 43) arranged for rendering the data and for transmitting the rendered data to the client (11; 111, 112; 41; 51).

2. Access system according to claim 1, wherein
the proxy server includes retrieving means (421) for retrieving the requested data from a data server (13; 131, 132, 133, 134), and storing means (423) for storing the requested data in temporary memory means (14) if it is determined that the requested data have to be rendered before transmission to the client; and
the processing server (15; 151, 152, 153; 43) is further arranged for retrieving the data stored in the temporary memory means (14) based on address information of the requested data.

3. Access system according to claim 1, wherein
the proxy server (12; 42) is arranged to transmit address information of the requested data to the processing server (15; 151, 152, 153; 43), and
the processing server is arranged to retrieve the requested data from a data server (13; 131, 132, 133, 134) using the address information.

4. Access system according to claim 2 or 3, wherein the proxy server (12; 42) includes
means for generating a link message containing the address information of the requested data; and
means for transmitting the link message to the client (11; 111, 112; 41; 51).

5. Access system according to claim 4, wherein the link message further includes at least one of the group consisting of
address information of the processing server,
data type information describing the requested data,
a client identifier, and
a session identifier.

6. Access system according to one of the claims 2 - 5, wherein the address information of the requested data is constituted by an URL and the data type information by a MIME type.

7. Access system according to one of the claims 4 - 6, comprising at the client a data handler (511) for establishing a communication link between the client and the processing server and for receiving the rendered data from the processing server (15; 151, 152, 153; 43).

8. Access system according to one of the preceding claims, wherein the proxy server (12; 42) includes means for direct transmission of the requested data to the client in case it is determined by determining means (422) that the requested data do not have to be rendered before transmission to the client.

9. Access system according to one of the preceding claims, comprising pre-selection means (512) located at the client (11; 111, 112; 41; 51) for performing a pre-selection of requests for data into requests requiring rendering of data and requests which do not require rendering of data and for transmitting requests requiring rendering to the proxy server (12; 42), and for directly retrieving data in case it is determined that the requested data do not require rendering before transmission to the client.

10. Access system according to one of the claims 2 - 9, wherein at least the proxy server (12; 42), the processing server and the temporary memory means are connected by a local network (18).

11. Access system according to one of the preceding claims, comprising
a plurality of processing servers;
means to determine at least one of the processing servers for rendering; and
wherein the proxy server (12; 42) is arranged to receive requests for data from a plurality of clients and to retrieve data from a plurality of data servers (13; 131, 132, 133).

12. Access system according to one of the preceding claims, wherein the processing server (15; 151, 152, 153; 43) is arranged to transmit the rendered data to the client (11; 111, 112; 41; 51) on a return path including the proxy server (12; 42).

13. Access system according to one of the preceding claims, wherein the processing server and the proxy server are constituted by a single data processing device.

14. Client adapted to cooperate with the access system according to any of the preceding claims, comprising
means to generate a request for data,
means to receive and analyse a link message from the access system; and
a data handler (511) for establishing a communication link between the client and the processing server and for receiving rendered data from the processing server.

15. Client according to claim 14, comprising pre-selection means (512) for performing a pre-selection of requests for data into requests requiring rendering of data and requests which do not require rendering of data and for transmitting requests requiring rendering to the proxy server (12; 42), and for directly retrieving data at the client in case it is determined that the requested data do not require rendering before transmission to the client.

16. Proxy server for accessing data in a network, comprising
receiving means for receiving a request for data from a client (11; 111, 112; 41; 51),
determining means (422) for determining whether the requested data have to be rendered before transmission to the client, and
authorization means for authorizing a processing server (15; 151, 152, 153; 43) for rendering the data and for transmitting the rendered data to the client (11; 111, 112; 41; 51).

17. Proxy server according to claim 16, comprising
retrieving means (421) for retrieving the requested data from a data server (13; 131, 132, 133, 134),
storing means (423) for storing the requested data in temporary memory means (14) if it is determined that the requested data have to be rendered before transmission to the client, and
authorization means for authorizing the processing server (15; 151, 152, 153; 43) to retrieve the data stored in the temporary memory means based on address information of the requested data.

18. Proxy server according to claim 16, wherein the proxy server is arranged to transmit address information of the requested data to the processing server (15; 151, 152, 153; 43) for instructing the processing server to retrieve the requested data from a data server (13; 131, 132, 133, 134) using the address information.

19. Proxy server according to claim 16 - 18, comprising
means for generating a link message containing the address information of the requested data; and
means for transmitting the link message to the client (11; 111, 112; 41; 51).

20. Proxy server according to claim 19, wherein the link message further includes at least one of the group consisting of
address information of the processing server,
data type information describing the requested data,
a client identifier, and
a session identifier.

21. Proxy server according to one of the claims 16 - 20, comprising means for activating a data handler (511) to establish a communication link between the client and the processing server and to receive the rendered data from the processing server (15; 151, 152, 153; 43).

22. Proxy server according to one of the claims 16 - 21, comprising means for direct transmission of the requested data to the client in case it is determined by the determining means (422) that the requested data do not have to be rendered before transmission to the client.

23. Client adapted to cooperate with the proxy server according to any of the claims 16 - 22, comprising
means to generate a request for data,
means to receive and analyse a link message from the access system; and
a data handler (511) for establishing a communication link between the client and the processing server and for receiving rendered data from the processing server.

24. Client according to claim 23, comprising pre-selection means (512) for performing a pre-selection of requests for data into requests requiring rendering of data and requests which do not require rendering of data and for transmitting requests requiring rendering to the proxy server (12; 42), and for directly retrieving data at the client in case it is determined that the requested data do not require rendering before transmission to the client.

25. Processing server adapted to cooperate with the proxy server according to one of the claims 16 - 22, comprising
means for receiving an instruction message to render data requested by a client (11; 111, 112; 41; 51),
means for retrieving the requested data based on address information of the requested data,
means for rendering the data, and
means for transmitting the rendered data to the client.

26. Processing server according to claim 25, arranged to retrieve the requested data based on address information from at least one of
a temporary memory means (14), and
a data server (13; 131, 132, 133, 134).

27. Processing server according to claim 23 or 26, comprising receiving means for receiving an instruction message from a data handler (511) at the client to establish a communication link between the client and the processing server (15; 151, 152, 153; 43).

28. Client adapted to cooperate with the processing server according to claims 25 - 27, comprising
means to generate a request for data,
means to receive and analyse a link message from the access system; and
a data handler (511) for establishing a communication link between the client and the processing server and for receiving rendered data from the processing server.

29. Client according to claim 28, comprising pre-selection means (512) for performing a pre-selection of requests for data into requests requiring rendering of data and requests which do not require rendering of data and for transmitting requests requiring rendering to the proxy server (12; 42), and for directly retrieving data at the client in case it is determined that the requested data do not require rendering before transmission to the client.

30. Method for accessing data in a network, comprising:
receiving a request for data from a client (11; 111, 112; 41; 51) at a proxy server (12; 42);
determining whether the requested data have to be rendered before transmission to the client;
rendering the data at a processing server (15; 151, 152, 153; 43); and
transmitting the rendered data to the client (11; 111, 112; 41; 51).

31. Method according to claim 30, comprising
retrieving the requested data from a data server (13; 131, 132, 133, 134);
storing the requested data in temporary memory means (14) if it is determined at the proxy server (12; 42) that the requested data have to be rendered before transmission to the client; and
retrieving the data stored in the temporary memory means by the processing server (15; 151, 152, 153; 43).

32. Method according to claim 30, wherein
the proxy server (12; 42) transmits address information of the requested data to the processing server (15; 151, 152, 153; 43), and
the processing server retrieves the requested data from a data server (13; 131, 132, 133, 134) using the address information.

33. Method according to claim 30 - 32, comprising
generating a link message containing address information of the requested data; and
transmitting the link message to the client (11; 111, 112; 41; 51).

34. Method according to claim 33, wherein the link message further includes at least one of the group consisting of
address information of the processing server,
data type information describing the requested data,
a client identifier, and
a session identifier.

35. Method according to one of the claims 30 - 34, wherein the address information of the requested data is constituted by an URL and the data type information is a MIME type.

36. Method according to one of the claims 30 - 35, comprising activating a data handler (511) for establishing a communication link between the client and the processing server and for receiving the rendered data from the processing server (15; 151, 152, 153; 43).

37. Method according to one of the claims 30 - 36, comprising directly transmitting the requested data to the client in case it is determined by the determining means (422) that the requested data do not have to be rendered before transmission to the client.

38. Method according to one of the claims 30 - 37, comprising pre-selecting requests for data into requests requiring rendering of data and requests not requiring rendering of data and for transmitting requests requiring rendering to the proxy server (12; 42), and for directly retrieving data in case it is determined that the requested data do not require rendering before transmission to the client.

39. Method according to one of the claims 30 - 38, wherein at least the proxy server (12; 42), the processing server and the temporary memory means are connected by a local network (18).

40. Method according to one of the claims 30 - 39, wherein
at least one of a plurality of processing servers is determined for rendering; and
the proxy server (12; 42) receives requests for data from a plurality of clients (11; 111, 112; 41; 51) and retrieves data from a plurality of data servers (13; 131, 132, 133, 134).

41. Method according to one of the claims 30 - 40, wherein the functions of the processing server and the proxy server (12; 42) are executed by a single data processing device.

42. Method for accessing data in a network, comprising:
receiving a request for data from a client (11; 111, 112; 41; 51) at a proxy server (12; 42);
determining whether the requested data have to be rendered before transmission to the client;
authorizing a processing server (15; 151, 152, 153; 43) to render the data at and to transmit the rendered data to the client (11; 111, 112; 41; 51).

43. Method according to claim 42, comprising
retrieving the requested data from a data server (13; 131, 132, 133, 134);
storing the requested data in temporary memory means (14) if it is determined at the proxy server (12; 42) that the requested data have to be rendered before transmission to the client; and
authorizing the processing server (15; 151, 152, 153; 43) to retrieve the data stored in the temporary memory means.

44. Method according to claim 42, wherein
the proxy server (12; 42) transmits address information of the requested data to the processing server (15; 151, 152, 153; 43), and
the processing server retrieves the requested data from a data server (13; 131, 132, 133, 134) using the address information.

45. Method according to claim 42 - 44, comprising
generating a link message containing address information of the requested data; and
transmitting the link message to the client (11; 111, 112; 41; 51).

46. Method according to claim 45, wherein the link message further includes at least one of the group consisting of
address information of the processing server,
data type information describing the requested data,
a client identifier, and
a session identifier.

47. Method according to one of the claims 42 - 46, comprising activating a data handler (511) for establishing a communication link between the client and the processing server and for receiving the rendered data from the processing server (15; 151, 152, 153; 43).

48. Method according to one of the claims 42 - 47, comprising directly transmitting the requested data to the client in case it is determined by the determining means (422) that the requested data do not have to be rendered before transmission to the client.

49. Method according to one of the claims 42 - 48, wherein
at least one of a plurality of processing servers is determined for rendering; and
the proxy server (12; 42) receives requests for data from a plurality of clients (11; 111, 112; 41; 51) and retrieves data from a plurality of data servers (13; 131, 132, 133, 134).

50. Method for accessing data in a network, comprising:
receiving an instruction message at a processing server (15; 151, 152, 153; 43) to render data requested by a client (11; 111, 112; 41; 51);
retrieving the requested data from a temporary memory means (14) ;
rendering the data at the processing server; and
transmitting the rendered data to the client.

51. Method according to claim 50, wherein the processing server is instructed by a data handler (511) running at the client to retrieve the requested data from the temporary memory means (14).

52. Method according to claim 50, wherein
the processing server receives address information of the requested data, and
the processing server retrieves the requested data from a data server (13; 131, 132, 133, 134) using the address information.

53. A computer readable medium, having a program recorded thereon, where the program is to make the computer execute the method according to one of the claims 30 - 52.

54. A computer program product comprising the computer readable medium according to claim 53.
